# FASCICULE DE BREVET EUROPEEN

(11) **EP 3 543 139 B1**
(45) Date de publication et mention de la délivrance du brevet: **17.06.2020**
(21) Numéro de dépôt: 19155561.4
(22) Date de dépôt: 05.02.2019
(51) Int. Cl.: B64D 29/06, F02K 1/76

(54) **NACELLE EQUIPEE D'UN SYSTEME INVERSEUR COMPORTANT DES PORTES ET DES SYSTEMES DE VERROUILLAGE DES PORTES EN POSITION STOCKEE**
MIT EINEM UMKEHRSYSTEM AUSGESTATTETE GONDEL, DIE KLAPPEN UND SYSTEME ZUR VERRIEGELUNG DER KLAPPEN IN EINGEFAHRENER STELLUNG AUFWEIST
NACELLE PROVIDED WITH A REVERSER SYSTEM COMPRISING DOORS AND SYSTEMS FOR LOCKING THE DOORS IN STOWED POSITION

(30) Priorité: 23.03.2018 FR 1852536
(43) Date de publication de la demande: 25.09.2019
(73) Titulaire: Airbus Operations S.A.S., 31060 Toulouse (FR)
(72) Inventeur: RIDRAY, Frédéric, 32600 L'ISLE JOURDAIN (FR); PIARD, Frédéric, 31170 TOURNEFEUILLE (FR)
(74) Mandataire: Gicquel, Olivier Yves Gérard

(56) Documents cités:
- EP-A1- 3 323 710
- EP-A2- 2 409 921
- US-A1- 2005 039 438
- US-B1- 6 293 495

## Description

La présente invention concerne une nacelle d'un turboréacteur double flux qui est équipée d'un système inverseur comportant des portes mobiles entre une position stockée et une position déployée et un système de verrouillage qui est configuré pour verrouiller les portes en position stockée, un turboréacteur double flux comportant une telle nacelle, ainsi qu'un aéronef comportant au moins un tel turboréacteur double flux.

Un turboréacteur double flux de l'état de la technique présente un moteur sous forme d'un noyau et une nacelle entourant le moteur. Un tel turboréacteur double flux équipe un aéronef qui présente sous chaque aile un mât fixé sous l'aile et portant le turboréacteur double flux. Le turboréacteur double flux comporte entre la nacelle et le moteur, une veine secondaire dans laquelle s'écoule un flux secondaire.

Afin d'assurer une inversion de poussée du turboréacteur double flux, la nacelle est équipée d'un système inverseur qui comporte des portes qui sont mobiles entre une position stockée et une position déployée. En position déployée, les portes se positionnent en travers de la veine secondaire afin de dévier le flux secondaire vers l'extérieur et vers l'avant de la nacelle.

En position stockée, les portes sont soumises à de fortes pressions, et il peut arriver qu'elles se mettent à vibrer ce qui peut générer des bruits désagréables, et il est donc nécessaire de trouver un système qui empêche de telles vibrations.

La demande de brevet US2005/039438 décrit une solution à ce problème consistant en l'ajout d'un système de verrouillage permettant le verrouillage mutuel de la porte intérieure et de la porte extérieure en position stockées.

Un objet de la présente invention est de proposer une nacelle pour un turboréacteur double flux qui est équipée d'un système inverseur avec des portes mobiles entre une position stockée et une position déployée et pour chaque porte, un système de verrouillage, alternatif à celui décrit dans la demande US2005/039438 susmentionnée, pour verrouiller la porte en position stockée afin d'éviter les vibrations.

A cet effet, est proposée une nacelle pour un turboréacteur double flux selon la revendication 1.

Une telle nacelle permet de limiter les vibrations des portes lorsqu'elles sont en position stockée et avant qu'elles commencent à se déployer.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective d'un turboréacteur double flux selon un mode de réalisation particulier de l'invention lorsque le système inverseur de poussée n'est pas activé,
la Fig. 3 est une vue en perspective du turboréacteur double flux de la Fig. 2 lorsque le système inverseur de poussée est activé,
la Fig. 4 est une vue en perspective d'une porte équipée de deux systèmes de verrouillage selon l'invention, et
la Fig. 5 est une vue en perspective d'un système de verrouillage pour une nacelle selon l'invention.

Dans la description qui suit, les termes relatifs à une position sont pris en référence au sens d'avancement d'un aéronef.

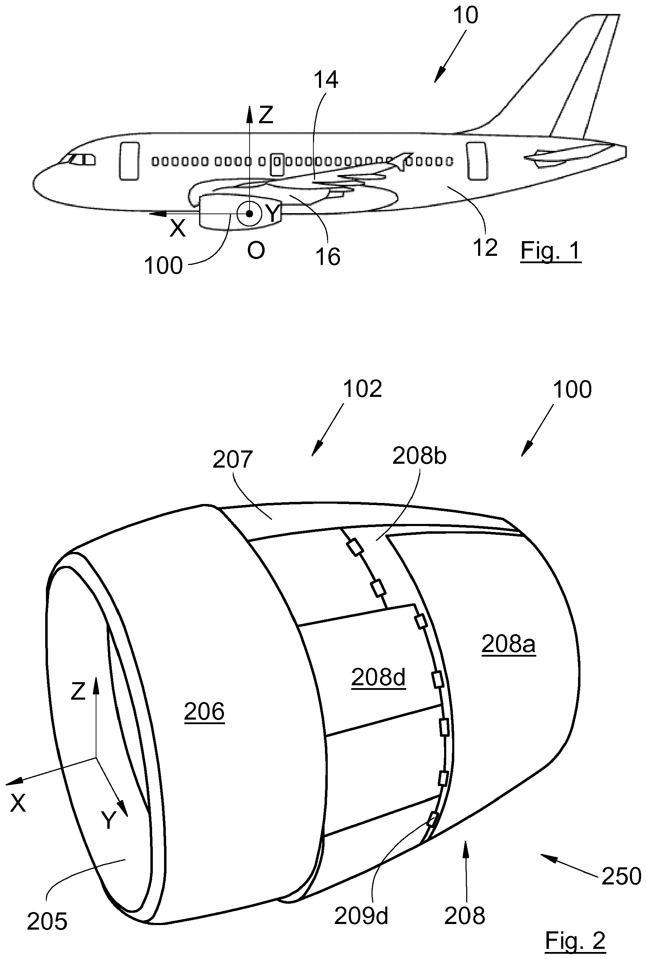

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois directions X, Y et Z étant orthogonales entre elles.

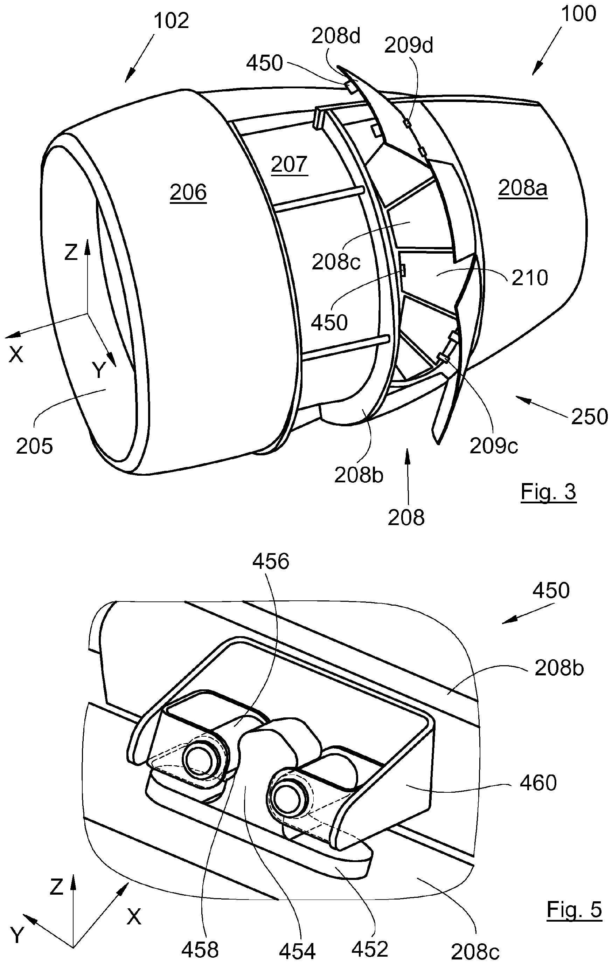

Les Figs. 2 et 3 montrent le turboréacteur double flux 100 selon un mode de réalisation particulier de l'invention.

Le turboréacteur double flux 100 présente une nacelle 102, un moteur qui est logé à l'intérieur de la nacelle 102 sous forme d'un noyau et un carter de soufflante 206 en avant de la nacelle 102.

La nacelle 102 comporte un système inverseur 250 qui est escamoté sur la Fig. 2 et déployé sur la Fig. 3.

Le turboréacteur double flux 100 présente entre la nacelle 102 et le moteur, une veine secondaire dans laquelle circule un flux secondaire provenant de l'entrée d'air 205 à travers une soufflante et qui s'écoule donc selon un sens d'écoulement qui va de l'avant vers l'arrière de l'aéronef 10.

La nacelle 102 présente une structure fixe 207 qui est montée fixe sur le carter de soufflante 206.

Le système inverseur 250 présente un ensemble mobile 208 qui comprend un capot mobile 208a formant les parois de la tuyère et un cadre 208b. Le cadre 208b prend ici la forme d'un cylindre à parois ajourées. Le capot mobile 208a est fixé au cadre 208b.

Il y a deux capots mobiles 208a disposés de part et d'autre d'un plan médian du turboréacteur double flux 100, chacun constituant un capot extérieur de la nacelle 102 et ils forment globalement un cylindre qui constitue la paroi externe de la veine secondaire.

L'ensemble mobile 208, par l'intermédiaire du cadre 208b, est monté mobile en translation selon une direction de translation globalement parallèle à l'axe longitudinal X sur la structure fixe 207 de la nacelle 102.

La translation du cadre 208b, et donc de l'ensemble mobile 208, est réalisée par tous systèmes de glissières appropriés comme par exemple des glissières entre la structure fixe 207 et le cadre 208b. De la même manière, un premier système de transmission mécanique du système inverseur 250 est fixé à la structure fixe 207 pour déplacer le cadre 208b. Le premier système de transmission mécanique comprend par exemple des actionneurs tels que des vérins, des moteurs, des crémaillères.... Le premier système de transmission mécanique est commandé par une unité de contrôle de l'aéronef 10 et n'est pas décrit plus en détails, car il peut prendre différentes formes à la portée de l'homme du métier.

L'ensemble mobile 208 comporte également des portes d'inversion 208c-d qui sont montées articulées sur le cadre 208b et qui comprennent dans le mode de réalisation de l'invention présenté ici des portes intérieures 208c et des portes extérieures 208d.

Les portes 208c-d sont disposées à l'avant par rapport au capot mobile 208a.

Dans le mode de réalisation de l'invention présenté ici, chaque porte intérieure 208c est montée articulée sur le cadre 208b entre une position stockée et une position déployée (Fig. 3) et inversement. Le passage de la position stockée à la position déployée s'effectue par une rotation de la porte intérieure 208c vers l'intérieur du turboréacteur 100.

Chaque porte intérieure 208c est ici articulée par un bord arrière au cadre 208b par des charnières 209c fixées au cadre 208b tandis que le bord libre opposé se positionne vers l'avant en position stockée et en travers de la veine secondaire et vers le moteur en position déployée.

Les portes extérieures 208d sont disposées à l'extérieur par rapport aux portes intérieures 208c. Chaque porte extérieure 208d est montée en regard d'une porte intérieure 208c et la porte extérieure 208d et la porte intérieure 208c en regard constituent un couple de portes. Le système inverseur 250 comporte ainsi une pluralité de couples de portes 208c-d.

Chaque porte extérieure 208d est montée articulée sur le cadre 208b entre une position stockée (Fig. 2) et une position déployée (Fig. 3) et inversement. Le passage de la position stockée à la position déployée s'effectue par une rotation de la porte extérieure 208d vers l'extérieur du turboréacteur 100. Lorsque les portes intérieures 208c et les portes extérieures 208d sont déployées, elles forment globalement une continuité qui permet de dévier le flux secondaire vers l'extérieur et l'avant de la nacelle 102.

Chaque porte extérieure 208d est articulée par un bord arrière au cadre 208b par des charnières 209d fixées au cadre 208b tandis que le bord libre opposé se positionne vers l'avant en position stockée et vers l'extérieur en position déployée.

En position stockée, les portes extérieures 208d sont disposées entre le capot mobile 208a et le carter de soufflante 206, de manière à constituer une paroi extérieure de la nacelle 102 qui est donc en contact avec le flux d'air qui s'écoule autour de la nacelle 102.

Le passage de chaque porte 208c-d de la position stockée à la position déployée et inversement est assuré par un deuxième système de transmission mécanique du système inverseur 250, comprenant par exemple un moteur, un vérin, un système à crémaillère. Le deuxième système de transmission mécanique est commandé par une unité de contrôle de l'aéronef 10 et n'est pas décrit plus en détails, car il peut prendre différentes formes à la portée de l'homme du métier.

L'ensemble mobile 208, et donc le cadre 208b, est mobile entre une position avancée (Fig. 2) et une position reculée (Fig. 3) et inversement. En position avancée, l'ensemble mobile 208, et donc le cadre 208b, est positionné le plus en avant possible de manière à ce que les portes extérieures 208d, qui sont en position stockée, soient rapprochées du carter de soufflante 206. En position reculée, l'ensemble mobile 208, et donc le cadre 208b, est positionné le plus en arrière possible de manière à ce que les portes extérieures 208d soient éloignées du carter de soufflante 206.

En position avancée, les portes extérieures 208d prolongent le carter de soufflante 206 vers l'arrière et, de la même manière, le capot mobile 208a prolonge les portes extérieures 208d vers l'arrière.

La position stockée des portes 208c-d peut être adoptée lorsque le cadre 208b est en position avancée ou en position reculée. La position déployée des portes 208c-d ne peut être adoptée que lorsque le cadre 208b est en position reculée.

Le passage de la position avancée du cadre 208b à la position reculée du cadre 208b et déployée des portes 208c-d consiste donc, à partir de la position avancée du cadre 208b et donc des positions stockées des portes 208c-d, à activer le premier système de transmission mécanique pour reculer le cadre 208b par translation par rapport à la structure fixe 207 pour atteindre la position reculée pour le cadre 208b et les positions stockées des portes 208c-d, puis à activer chaque deuxième système de transmission mécanique pour déplacer chaque porte 208c-d de la position stockée à la position déployée.

Le déplacement inverse permet de revenir à la position stockée et avancée.

En position reculée, la nacelle 102 présente une fenêtre 210 ouverte entre la veine secondaire et l'extérieur de la nacelle 102 et qui est délimitée à l'avant par la structure fixe 207 et à l'arrière par le capot mobile 208a. En position stockée, les portes 208c-d obturent la fenêtre 210 et en position déployée, les portes 208c-d n'obturent pas la fenêtre 210 et la laissent libre, c'est-à-dire que l'air provenant du flux secondaire traverse la fenêtre 210 pour rejoindre l'extérieur du turboréacteur double flux 100.

Lorsque les portes 208c-d sont en position déployée, le flux secondaire est dévié vers l'extérieur de la nacelle 102 et vers l'avant permettant de produire une contre-poussée.

Selon un autre mode de réalisation non représenté, la nacelle ne comporte pas de capot mobile et les portes sont montées basculantes sur la structure fixe qui présente une fenêtre qui est obturée par les portes en position stockée et ouverte entre la veine secondaire et l'extérieur lorsque les portes sont en position déployée.

De la même manière, dans le mode de réalisation de l'invention présenté ici, il y a une porte extérieure et une porte intérieure pour dévier le flux secondaire, mais il est possible de prévoir une seule porte intérieure articulée au niveau d'un bord arrière et des cascades, ou une porte mixte qui s'étend en travers de la veine secondaire et à l'extérieur de la nacelle lorsqu'elle est en position déployée. Dans ce dernier cas, l'axe de rotation de la porte mixte n'est pas au niveau d'un bord arrière mais au niveau d'une partie milieu de la porte mixte.

D'une manière générale, chaque porte est montée articulée entre une position stockée dans laquelle elle n'est pas en travers de la veine secondaire et une position déployée dans laquelle elle est en travers de la veine secondaire.

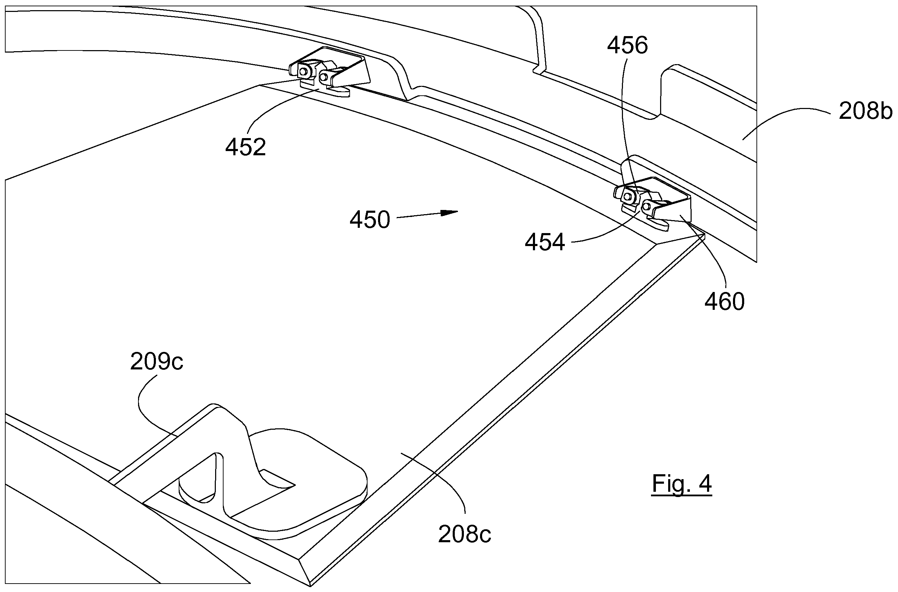

La Fig. 4 montre une porte intérieure 208c en position stockée ici sur le cadre 208b mais qui peut être la structure fixe lorsqu'il n'y a pas de cadre mobile.

L'invention est maintenant plus particulièrement décrite pour une porte intérieure 208c, mais elle peut également s'appliquer à une porte extérieure 208d comme cela est schématisé sur la Fig. 3.

La porte intérieure 208c présente deux systèmes de verrouillage 450 dont un est agrandi en Fig. 5. Une augmentation du nombre de systèmes de verrouillage 450 permet d'avoir un meilleur verrouillage, mais cela entraîne une augmentation du poids et le besoin d'une force plus importante pour le déverrouillage et il est donc nécessaire de faire un compromis sur le nombre de systèmes de verrouillage 450.

Le système de verrouillage 450 est configuré pour verrouiller la porte intérieure 208c en position stockée, pour déverrouiller la porte 208c automatiquement lorsque la porte intérieure 208c quitte sa position stockée pour aller vers la position déployée et pour verrouiller la porte 208c automatiquement lorsque la porte intérieure 208c rejoint sa position stockée depuis la position déployée. Le déverrouillage de la porte intérieure 208c s'effectue automatiquement lorsqu'une force supérieure à un seuil est dépassée. De la même manière, le verrouillage de la porte intérieure 208c s'effectue automatiquement lorsqu'une force supérieure à un seuil est dépassée.

Le système de verrouillage 450 comporte un sabot 452 fixé à la porte intérieure 208c, et plus particulièrement ici sur la face de la porte intérieure 208c orientée vers l'extérieur de la nacelle 102. Pour une porte extérieure 208d, le sabot 452 est fixé sur la face de la porte extérieure 208d orientée vers l'intérieur de la nacelle 102. D'une manière générale, le sabot 452 est fixé sur la face orientée à l'opposé de la direction allant de la position stockée à la position déployée.

Le sabot 452 porte un plot 454 orienté à l'opposé de la porte intérieure 208c et présentant un étranglement 458 entre sa base fixée au sabot 452 et sa pointe. L'axe du plot 452 est globalement perpendiculaire à la porte intérieure 208c.

Le système de verrouillage 450 comporte également deux mâchoires 456 fixées au cadre 208b et plus généralement à la nacelle 102, chacune prenant ici la forme d'un cylindre dont l'axe est perpendiculaire à l'axe du plot 452. Les mâchoires 456 étant mobiles entre une position écartée où la distance entre les deux mâchoires 456 est supérieure à la largeur de la pointe du plot 452 et une position resserrée où la distance entre les deux mâchoires 456 est inférieure à la largeur de la pointe du plot 452.

Lorsqu'il n'y a pas de capot mobile, les mâchoires 456 sont fixées à la structure fixe.

Chaque mâchoire 456 est montée sur le cadre 208b par l'intermédiaire d'un support élastique 460 qui est ici une lame ressort. Le seuil pour le déverrouillage et le verrouillage correspond à la force nécessaire pour écarter les mâchoires 456.

En position verrouillée, les mâchoires 456 serrent le plot 452 au niveau de son étranglement 458 lorsque la porte intérieure 208c est en position stockée. Ainsi, la porte intérieure 208c ne vibre pas lorsqu'elle est en position stockée.

Lorsque la porte intérieure 208c est soumise par le deuxième système de transmission mécanique à une force tendant à la déplacer vers la position déployée, le plot 452 se déplace et la pointe du plot 452 écarte les mâchoires 456 grâce à la flexibilité de chaque support élastique 460. La pointe peut alors sortir des mâchoires 456 et la porte intérieure 208c est déverrouillée et peut librement se déplacer vers la position déployée.

A l'inverse, lorsque la porte intérieure 208c est soumise par le deuxième système de transmission mécanique à une force tendant à la déplacer vers la position stockée, le plot 452 se déplace et la pointe du plot 452 pénètre entre les mâchoires 456 en les écartant du fait de la flexibilité de chaque support élastique 460. La pointe peut alors ressortir de l'autre côté des mâchoires 456 et les mâchoires 456 se resserrent sur l'étranglement 458 et la porte intérieure 208 est verrouillée en position stockée.

## Revendications

1. Nacelle (102) pour un turboréacteur double flux (100) présentant une veine secondaire, ladite nacelle (102) présentant une fenêtre (210) ouverte entre la veine secondaire et l'extérieur de la nacelle (102) et comportant un système inverseur (250) comportant des portes (208c-d) où chaque porte (208c-d) est mobile entre une position stockée dans laquelle la porte (208c-d) obture la fenêtre (210) et une position déployée dans laquelle la porte (208c-d) n'obture pas la fenêtre (210), et, pour chaque porte (208c-d), au moins un système de verrouillage (450) configuré pour verrouiller la porte (208c-d) en position stockée, pour déverrouiller la porte (208c-d) automatiquement lorsque la porte (208c-d) quitte sa position stockée et pour verrouiller la porte (208c-d) automatiquement lorsque la porte (208c-d) rejoint sa position stockée, la nacelle (102) étant **caractérisée en ce que** chaque système de verrouillage (450) comporte un sabot (452) fixé à la porte (208c-d), un plot (454) orienté à l'opposé de la porte (208c-d) et présentant un étranglement (458) entre sa base fixée au sabot (452) et sa pointe, deux mâchoires (456) fixées à la nacelle (102) par l'intermédiaire d'un support élastique (460) et mobiles entre une position écartée où la distance entre les deux mâchoires (456) est supérieure à la largeur de la pointe du plot (452) et une position resserrée où la distance entre les deux mâchoires (456) est inférieure à la largeur de la pointe du plot (452).

2. Nacelle (102) selon la revendication 1, **caractérisée en ce que** chaque support élastique (460) est une lame ressort.

3. Nacelle (102) selon l'une des revendications 1 ou 2, **caractérisée en ce que** chaque mâchoire (456) prend la forme d'un cylindre dont l'axe est perpendiculaire à l'axe du plot (452).

4. Turboréacteur double flux (100) comportant un moteur et une nacelle (102) selon l'une des revendications précédentes et qui entoure le moteur et définit avec lui une veine secondaire.

5. Aéronef (10) comportant au moins un turboréacteur double flux (100) selon la revendication précédente.

## Patentansprüche

1. Gondel (102) für ein Zweistrom-Turbostrahltriebwerk (100), das einen Sekundärstrahl aufweist, wobei die Gondel (102) ein offenes Fenster (210) zwischen dem Sekundärstrahl und der Außenseite der Gondel (102) sowie ein Umschaltsystem (250) aufweist, das Türen (208c-d) aufweist, wobei jede Tür (208c-d) zwischen einer eingefahrenen Position, in der die Tür (208cd) das Fenster (210) verschließt, und einer ausgefahrenen Position, in der die Tür (208c-d) das Fenster (210) nicht verschließt, beweglich ist, sowie für jede Tür (208c-d) mindestens ein Verriegelungssystem (450), das dazu ausgestaltet ist, die Tür (208c-d) in der eingefahrenen Position zu verriegeln, die Tür (208c-d) automatisch zu entriegeln, wenn die Tür (208c-d) ihre eingefahrene Position verlässt, und die Tür (208c-d) automatisch zu verriegeln, wenn die Tür (208c-d) wieder in ihre eingefahrene Position geht, **dadurch gekennzeichnet, dass** jedes Verriegelungssystem (450) einen an der Tür (208c-d) befestigten Schuh (452), einen Klotz (454), der gegenüber der Tür (208c-d) ausgerichtet ist und eine Verengung (458) zwischen seiner an dem Schuh (452) befestigten Basis und seiner Spitze aufweist, und zwei Backen (456) aufweist, die mittels einer elastischen Stütze (460) an der Gondel (102) befestigt und zwischen einer beabstandeten Position, in der der Abstand zwischen den beiden Backen (456) größer als die Breite der Spitze des Klotzes (452) ist, und einer herangezogenen Position, in der der Abstand zwischen den beiden Backen (456) kleiner als die Breite der Spitze des Klotzes (452) ist, beweglich sind.

2. Gondel (102) nach Anspruch 1, **dadurch gekennzeichnet, dass** jede elastische Stütze (460) ein Federblatt ist.

3. Gondel (102) nach einem der Ansprüche 1 oder 2, **dadurch gekennzeichnet, dass** jede Backe (456) die Form eines Zylinders hat, dessen Achse senkrecht zu der Achse des Klotzes (452) verläuft.

4. Zweistrom-Turbostrahltriebwerk (100), aufweisend ein Triebwerk und eine Gondel (102) nach einem der vorhergehenden Ansprüche, die das Triebwerk umgibt und mit ihm einen Sekundärstrahl definiert.

5. Luftfahrzeug (10), aufweisend mindestens ein Zweistrom-Turbostrahltriebwerk (100) nach dem vorhergehenden Anspruch.

## Claims

1. Nacelle (102) for a bypass turbojet engine (100) having a secondary flow path, the said nacelle (102) exhibiting an open window (210) between the secondary flow path and the outside of the nacelle (102) and comprising a reverser system (250) comprising doors (208c-d) in which each door (208c-d) is able to move between a stowed position in which the door (208c-d) closes off the window (210) and a deployed position in which the door (208c-d) does not close off the window (210) and, for each door (208c-d), at least one locking system (450) configured to lock the door (208c-d) in the stowed position, to unlock the door (208c-d) automatically when the door (208c-d) leaves its stowed position and to lock the door (208c-d) automatically when the door (208c-d) arrives in its stowed position, the nacelle (102) being **characterized in that** each locking system (450) comprises a shoe (452) fixed to the door (208c-d), a stud (454) facing away from the door (208c-d) and having a restriction (458) between its base fixed to the shoe (452) and its tip, two jaws (456) fixed to the nacelle (102) via an elastic support (460) and able to move between a parted position in which the distance between the two jaws (456) is greater than the width of the tip of the stud (452) and a contracted position in which the distance between the two jaws (456) is less than the width of the tip of the stud (452).

2. Nacelle (102) according to Claim 1, **characterized in that** each elastic support (460) is a spring leaf.

3. Nacelle (102) according to either of Claims 1 and 2, **characterized in that** each jaw (456) adopts the form of a cylinder the axis of which is perpendicular to the axis of the stud (452).

4. Bypass turbojet engine (100) comprising an engine and a nacelle (102) according to one of the preceding claims and which surrounds the engine and therewith defines a secondary flow path.

5. Aircraft (10) comprising at least one bypass turbojet engine (100) according to the preceding claim.
